# EUROPEAN PATENT SPECIFICATION

(11) **EP 2 657 043 B1**
(45) Date of publication and mention of the grant of the patent: **16.03.2016**
(21) Application number: 12165354.7
(22) Date of filing: 24.04.2012
(51) Int. Cl.: B60B 15/08, B60B 15/02

(54) **Wheel preferably for use on lawns and method of manufacturing same**
Rad zur vorzugsweisen Verwendung auf Rasen und Herstellungsverfahren dafür
Roue destinée à être utilisée de préférence sur les pelouses et son procédé de fabrication

(43) Date of publication of application: 30.10.2013
(73) Proprietor: Robert Bosch GmbH, 70442 Stuttgart (DE)
(72) Inventor: Marshall, Lewis, Ashby de la Zouch, Leicestershire LE65 2LG (GB); Baxter, Richard, IP14 5UE, Suffolk Stowmarket (GB); Johnson, William, Ipswich, Suffolk IP6 8JJ (GB)

(56) References cited:
- DE-A1- 3 315 123
- DE-U- 1 955 783
- GB-A- 428 021
- GB-A- 447 034
- GB-A- 2 356 120
- US-A- 4 170 384

## Description

The present invention relates to a wheel and a method for making same. The described wheel is particularly useful as a driven wheel on lawns,

Whilst such a wheel may be used on other apparatus, we will describe a wheel for use on a lawn or autonomous ground care apparatus, and the primary use is in lawn care apparatus such as a lawnmower. The wheel is particularly useful as a driven wheel for an autonomous ground care apparatus (e.g. a "robot" lawn mower).

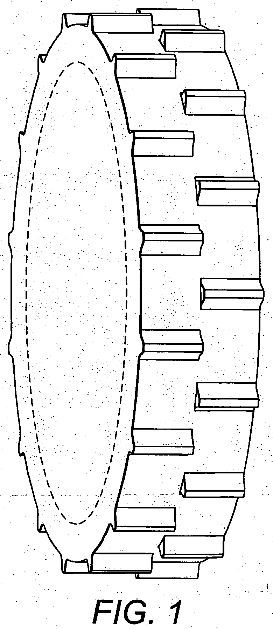

Such apparatus is usually driven by a motor and the wheels propelling the apparatus need to grip the grass properly. Thus the wheels are normally equipped with a tread pattern to engage and grip with the surface, i.e. the grass or a path. Problems arise in that the gripping surfaces frequently become ineffective because the tread clogs with dirt, and particularly with grass cuttings. Generic typical tread patterns are illustrated in Figs 1, 2 and 3.

The arrangement in Fig. 1 is a tread which comprises a series of vertical bars. These are sometimes ineffective at providing grip and resisting debris built up between the vertical treads. The tread grips well, but can sometimes damage grazed areas.

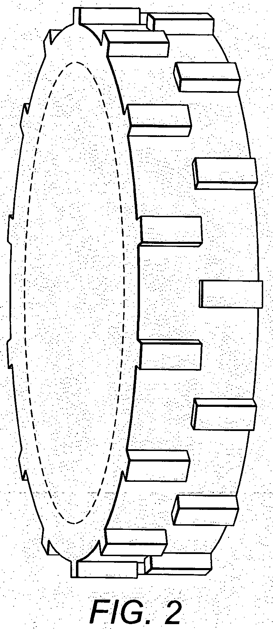

In the arrangement of Fig. 2, the tread can become clogged due to the vertical sides to the treads. Once clogged, ineffective grip occurs and thus the apparatus is not easily driven forwards or backwards by the driven wheels.

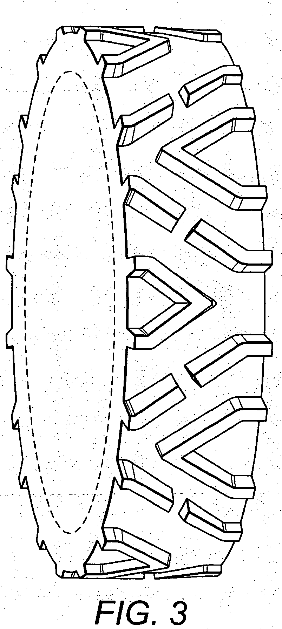

In Fig. 3 the treads can clog and in particular can hold mud within the triangular opposing treads. Sometimes they can cause extensive damage to lawned areas during cutting, and this is a particular problem around the docking station if applied to so-called robot mowers.

Furthermore, most wheel designs are poor at preventing sideways slipping of the apparatus, e.g. when passing along a slope.

The problems outlined above are particularly acute with a so-called robot lawn mower which is left to operate unattended for long periods. If the wheels slip it will remain stationary and may not be able to return to its charging station. It may not have sufficient grip to properly engage with the charging station. Furthermore slip of the wheel may cause navigational confusion as the apparatus may lose the accurate position of the mower.

Similarly, if it slides down a slope it may not be able to return to its charging station.

Also because robot mowers steer themselves by independently rotating the two drive wheels, they can manoeuvre by rotating one wheel only so the mower turns about the stationary wheel. This causes significant damage to the lawn.

Further problems can occur with wheels made of moulded components. It is not uncommon for such wheels to be made of several components which under rugged use may come apart.

The present invention seeks to reduce some or all of these problems. GB 428021 describes a wheel in accordance with the preamble of claim 1.

### Statements of the Invention

The present invention provides a wheel as defined in claim 1 for use on lawns or similar surfaces.

Preferably said rib has sidewalls extending generally in planes parallel to the sides of the wheel.

Preferably the radius form the wheel axis of the outer circumferential edge of the rib is less than the maximum radius from the wheel axis of the treads of the tread pattern, preferably by 0 - 4mm, more preferably by substantially 2mm. Alternatively the radius of the outer circumferential edge of the rib is equal to the maximum radius of the treads of the tread pattern.

Preferably the width of the outer circumferential edge of said rib and width of each tread at its tip are narrow and are preferably less than 5mm, preferably substantially 2mm wide.

In this way, the outer edges of the rib and treads form a rolling surface for the wheel.

Because the area between adjacent upstanding treads forms a smooth channel, debris and grass cuttings are less likely to collect. This is further enhanced by the fact that the surface is continuous which means that there is no discontinuity which can cause debris and grass cuttings to collect.

In a further arrangement, where the depth of the channel at its deepest with respect to the outer circumference of the wheel is *y*, and the circumferential distance between adjacent upright treads is *x, x*/*y* is preferably between 2 and 6, and more preferably, is substantially 4.

The continuous curved line of the shallow channels may be of the same radius throughout, but in a preferred arrangement, the opposite portions of the channel adjacent the upright treads include a portion where the radius of the curved line reduces.

In a preferred arrangement the tread pattern is divided into two individual patterns on opposite sides of a plane intermediate the opposite sides of the wheel, the upstanding treads on one side of said plane being out of step with the upstanding treads on the other side of said plane.

Preferably, the tread pattern is divided into two identical patterns on opposite side of said plane, an outwardly extending rib being provided in said plane. Preferably the radius from the wheel axis of the outer circumferential edge of the rib is less than or equal to the maximum radius from the wheel axis of the treads of the tread pattern, preferably by 0 - 4mm, more preferably by substantially 2mm..

We also describe a drive wheel for an autonomous ground care machine in which ground contact is made by a narrow circumferential tread element forming a substantially continuous rolling diameter in conjunction with narrow tread form peaks extending to either side of said circumferential tread element.

Preferably, the outer circumferential surface of the wheel is of a moulded material.

We also describe a method of making a wheel comprising moulding an inner core, providing a generally circular cap to engage with the side surface of the inner core, engaging the inner core and circular cap to form an assembly, and moulding a surface over the circumferential outer surface and at least part of said side surface of the assembly so as to cover a joint between the inner core and the circular cap to permanently engage them, the moulded surface incorporating a tread pattern.

Preferably the tread pattern is as set out in one or more of the preceding paragraphs.

Preferably the inner core is shaped that, in the moulding operation, some moulded material passes behind at least one surface facing the axis of the wheel, so as to lock the moulded surface to the inner core. In a preferred embodiment, the inner core, and preferably the circular cap is moulded of polypropylene, and the moulded surface is of silicone rubber.

### Brief Description of the Drawings

Preferred embodiments of the invention will now be described by way of example only, and with reference to the accompanying drawings in which:
Fig. 4 is an exploded view of the three parts of a wheel in accordance with a preferred embodiment of the invention;

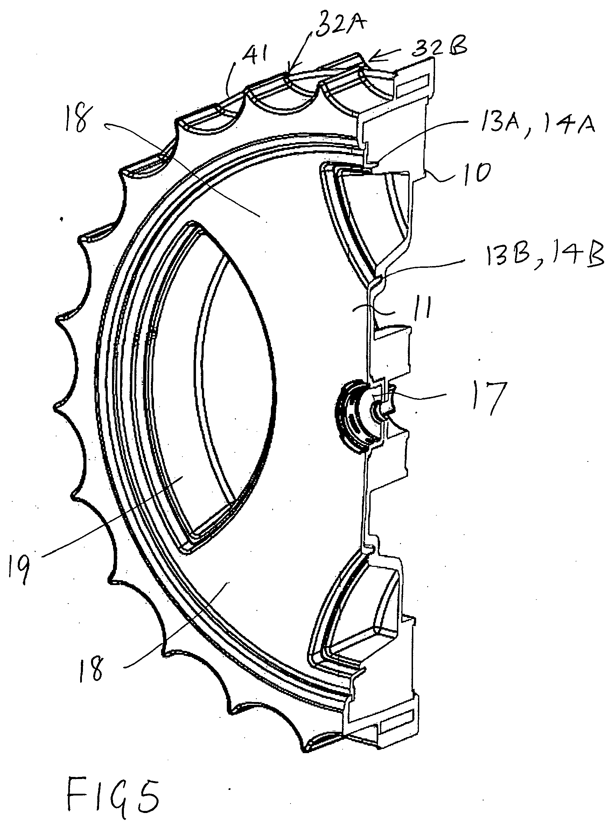

Fig. 5 is perspective view of the wheel in Fig. 4 but cut away parallel to the axis;

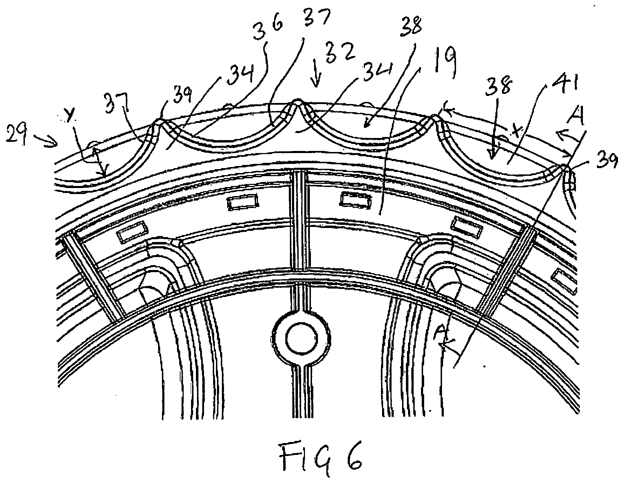

Fig. 6 shows a detail of the inside of the wheel of Fig. 1;
Fig. 7 is a detail of the moulded part of the wheel;

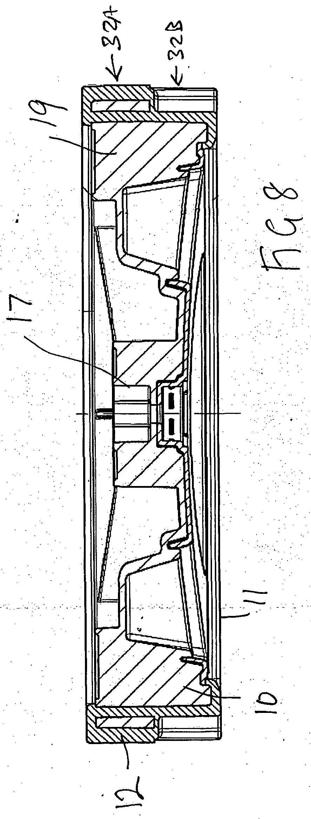

Fig. 8 is a transverse section of the wheel of Fig. 4 on the line A-A of Fig. 6;

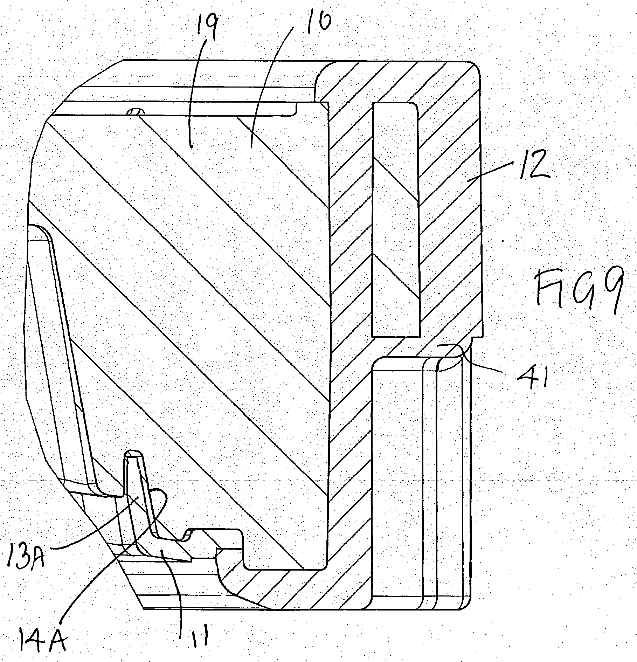

Fig. 9 is a detail of part of Fig. 8.
Figs. 10 and 11 are perspective view of the inside and outside faces of the wheel.

### Description of preferred embodiments of the invention

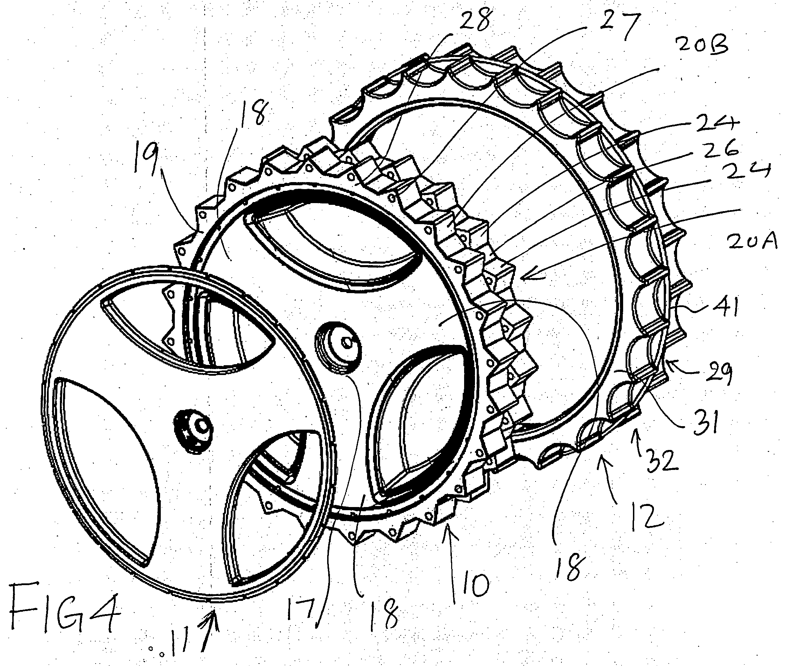

Fig. 4 is an exploded view of the wheel according to the preferred embodiment, and comprises an inner core 10, a circular cap 11 and a moulded surface 12. The inner core 10, which may be moulded polypropylene, is engaged with the circular cap 11 which may be of moulded polypropylene but usually in a different colour, typically silver. The moulded surface 12 is of moulded silicone rubber. The inner core 10 and circular cap 11 are shaped so as mechanically connect to one another by virtue of pins and bores or by means of a interference fit between edges. In practice, as is shown in the Figures, the outer circumferential part of the circular cap 11 includes flange 13A, 13 B which engage with mating surfaces in the form of slots 14A, 14B in a side surface 16 of the inner core. The inner core 10 includes a central socket portion 17 to engage with an axle (not shown) which mounts the wheel. The shape and configuration of the inner core includes three spoke like members 18 which extend from the central socket portion to a rim portion 19. The outer circumferential surface of the rim portion 19 carries a moulded pattern comprising two patterns 20A, 20B of upright triangular portions 24. The two patterns 20A, 20B are formed on opposite sides of a central plane normal to the axis of the wheel. Adjacent upright triangular parts 24 are joined by generally circumferential parts 26. The upright triangular parts 24 are hollow so that they have inner faces facing the axis of the wheel and there are provided holes 27 in the side surface 28 in each case.

The outer moulded surface 12 has a generally outer circumferential surface 29 and two side surfaces 31. As will be described later, the moulded surface 12 is formed by moulding the relevant material over the rim 19 of the inner core 10. The tread pattern 32 on the outer circumferential surface 29 somewhat echoes the form of the circumferential surface 26 of the inner core, that is, above each upright triangular part 24 there is formed upstanding treads 34, and between the upstanding treads 34 is provided opposite walls 36, 37 facing the adjacent tread. The wall 36 of one upstanding tread 34 merges into the facing wall 37 of the adjacent upstanding tread 34 so as to form a channel 38, thereby providing channels 38 between each upstanding tread, the channels being generally shallow. If the depth of each channel at its deepest with respect to the outer circumference of the wheel is y, and the circumferential distance between adjacent upright treads is x, *x*/*y* is between 2 and 6 and is substantially 4. The width of the tips 39 of the treads is 0-4 mm, typically 2mm.

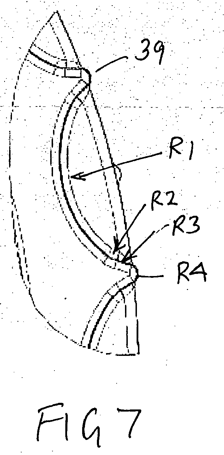

The surface of each channel extends between adjacent upstanding treads 34 in the form of a continuous curved line. The continuous curved line is of the same radius R1 except adjacent the upstanding treads 34 as is clear from Fig. 7. From Fig.7 it is clear that adjacent the upstanding treads, the radius R1 reduces successively through R2, R3 before changing direction at the tip of the upstanding tread where the tip is formed of a rounded section of short radius R4.

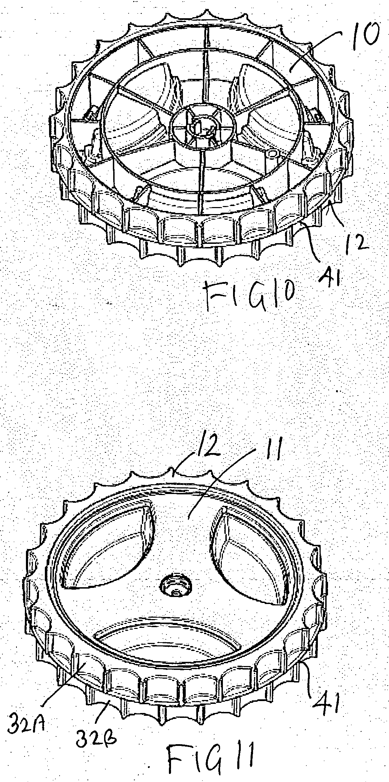

The tread pattern 32 is formed of two patterns 32A and 32B, the two sets of tread pattern 32A, 32B each extending from one side of the wheel to a plane intermediate opposite sides of the wheel. The upstanding treads 34 of one pattern 32A are out of step with the upstanding treads on the opposite pattern 32B. It is also clear from Fig. 1 and Figs. 10 and 11 in particular, that the two patterns are divided by a central radially disposed rib 41 which is formed at the central circumferential line in a plane between opposite sides of the wheel. The rib 41 extends to an outer circumferential edge 42 which is substantially the same radius (from the wheel axis) as that of the tips 39 of the upstanding treads but it may be slightly smaller (by 0-4mm, usually substantially 2mm) or the same size as than the radius (from the wheel axis) of the tips 39. In this way the tips of the treads and rib form a rolling surface of the wheel. Of particular note is the fact that the width of tips of the treads and the width of the outer circumferential edge 42 of the rib is considerably less than prior wheels for use with lawn care apparatus and is preferably less than 5mm, in the preferred embodiment substantially 2mm. This provides particularly good traction and in combination with other features, good self cleaning.

Manufacturing the wheel described is carried out by engaging the circular cap and inner core together, and then mounting the assembly in a suitable mould and injection moulding the silicone rubber material for the moulded surface 12. It will be understood that the moulded surface 12 then extends down the sides of the inner core so as to engage over the joint between the circular cap and the inner core and thereby permanently bond them together. Furthermore, the moulded material passes through the holes 27 in the upright triangular parts 24 so that it engages the inner faces of the triangular parts 24. This provides retention of the moulded surface 12 with the rim portion 19.

We have described a preferred embodiment of a wheel which is useful with lawn care apparatus such as a lawn mower or scarifier, in particular, a robot lawn mower. The tread patterns and the tread pattern described and the design of the wheel reduces wear of the grass, which is particularly useful in the case of a robot lawn mower, which will be moving across the grass substantially continuously. The tread design prevents clogging by virtue of a number of features including the shallow channels and gives a stable non-side slip and high traction operation. It prevents lateral slippage on inclines and declines. The arrangement allows peak traction with minimal slip in the drive system even in wet conditions. The solid wheel construction allows high levels of wear to occur before wheel replacement is required. The shape of the tread allows the tyre to self clean even if some material has lodged in the tread.

The wheel tread design also minimises lawn damage during manoeuvring as the apparatus rotates about one stationary drive wheel contact point.

The invention is not limited to the details of the foregoing example.

## Claims

1. A wheel for use on lawns or similar surfaces, said wheel having a tread pattern (32) on its outer generally circumferential surface, said tread pattern (32) comprising a succession of upstanding treads (34) extending generally parallel to the axis of the wheel and an upstanding rib (41) in a plane intermediate the opposite sides of the wheel extending outwardly so that its outer circumferential edge has a radius from the wheel axis substantially the same as the maximum radius of the upstanding treads (34) of the tread pattern (32), said upstanding rib (41), in use, reducing side slip of the lawn care apparatus when working on a slope; **characterised in that**:
facing walls (36, 37) of adjacent upstanding treads (34) extending in a continuous curved line between them to define a channel (38) between the adjacent upstanding treads (34), wherein the depth of the channel (38) at its deepest with respect to the outer circumference of the wheel is *y*, and the circumferential distance between adjacent upstanding treads (34) is *x*, *s*/*y* is between 2 and 6; and **in that** the continuous curved line of the channels (38) includes opposite sides of the channel (38) adjacent the upstanding treads (34) include a portion where the radius of the curved line reduces.

2. A wheel as claimed in claim 1 in which said upstanding rib (41) has sidewalls extending generally in planes parallel to said opposite sides of the wheel.

3. A wheel as claimed in claim 1 or 2 in which the radius from the wheel axis of the outer circumferential edge of the upstanding rib (41) is less than the maximum radius from the wheel axis of the upstanding treads (34) of the tread pattern (32) by 0 - 4mm.

4. A wheel as claimed in claim 3 in which the radius from the wheel axis of the outer circumferential edge of the upstanding rib (41)is less than the maximum radius from the wheel axis of the upstanding treads (34) of the tread pattern (32) by substantially 2mm.

5. A wheel as claimed in claims 1 or 2 in which the radius from the wheel axis of the outer circumferential edge of the upstanding rib (41) is equal to the maximum radius from the wheel axis of the upstanding treads (34) of the tread pattern (32).

6. A wheel as claimed in any of the preceding claims in which the width of said upstanding rib (41) is 5mm or less.

7. A wheel as claimed in claim 6 in which the width of said upstanding rib (41) is substantially 2mm.

8. A wheel as claimed in any of claims 1 - 7 in which the width of each upstanding tread (34) at its tip is less than 5mm.

9. A wheel as claimed in claim 8 in which the width of each upstanding tread (34) at its tip (39) is substantially 2mm.

10. A wheel as claimed in any preceding claim in which *x*/*y* is substantially 4.

11. A wheel as claimed in any preceding claim in which the continuous curved line of the channels (38) is of the same radius throughout.

12. A wheel as claimed in any preceding claim in which the tread pattern (32) is divided into two individual patterns (20A, 20B) on opposite sides of a plane intermediate the opposite sides of the wheel, and the upstanding treads (34) on one side of said plane are out of step with the upstanding treads (34) on the other side of said plane.

13. A wheel as claimed in any preceding claim in which the tread pattern (32) is divided into two identical patterns on opposite side of a plane intermediate opposite sides of the wheel, an outwardly extending upstanding rib (41) being provided in said plane.

## Patentansprüche

1. Rad zur Verwendung auf Rasen oder ähnlichen Oberflächen, wobei das Rad ein Laufflächenprofil (32) an seiner äußeren allgemeinen Umfangsfläche aufweist, wobei das Laufflächenprofil (32) eine Abfolge von hochstehenden Laufflächen (34) umfasst, die sich im Allgemeinen parallel zu der Achse des Rades erstrecken, und eine hochstehende Rippe (41) in einer Ebene, die sich zwischen gegenüberliegenden Seiten des Rades nach außen erstreckt, sodass der äußere Umfangsrand einen Radius von der Radachse aufweist, der im Wesentlichen dem maximalen Radius der hochstehenden Laufflächen (34) des Laufflächenprofils (32) entspricht, wobei die hochstehende Rippe (41) bei der Verwendung ein seitliches Verrutschen des Rasenpflegegerätes beim Arbeiten an einer Steigung reduziert, **dadurch gekennzeichnet, dass**
sich zueinander weisende Wände (36, 37) benachbarter hochstehender Laufflächen (34) erstreckend in einer kontinuierlich gekrümmten Linie dazwischen, um einen Kanal (38) zwischen benachbarten hochstehenden Laufflächen (34) zu bilden, wobei die Tiefe des Kanals (38) an seiner tiefsten Stelle in Bezug auf den Außenumfang des Rades y beträgt und der Umfangsabstand zwischen benachbarten hochstehenden Laufflächen (34) x beträgt, wobei x/y zwischen 2 und 6 beträgt; und dadurch, dass die kontinuierlich gekrümmte Linie der Kanäle (38) gegenüberliegende Seiten des Kanals (38) benachbart zu den hochstehenden Laufflächen (34) aufweist, einen Abschnitt aufweisen, in dem sich der Radius der gekrümmten Linie verringert.

2. Rad nach Anspruch 1, wobei die hochstehende Rippe (41) Seitenwände aufweist, die sich im Allgemeinen in Ebenen erstrecken, die parallel zu den gegenüberliegenden Seiten des Rades verlaufen.

3. Rad nach Anspruch 1 oder 2, wobei der Radius von der Radachse des Außenumfangsrandes der hochstehenden Rippe (41) um 0 bis 4 mm kleiner als der maximale Radius der Radachse der hochstehenden Laufflächen (34) des Laufflächenprofils (32) ist.

4. Rad nach Anspruch 3, wobei der Radius der Radachse des Außenumfangsrandes der hochstehenden Rippe (41) im Wesentlichen 2 mm kleiner als der maximale Radius der Radachse der hochstehenden Laufflächen (34) des Laufflächenprofils (32) ist.

5. Rad nach einem der Ansprüche 1 oder 2, wobei der Radius der Radachse des Außenumfangsrandes der hochstehenden Rippe (41) dem maximalen Radius der Radachse der hochstehenden Laufflächen (34) des Laufflächenprofils (32) entspricht.

6. Rad nach einem der vorhergehenden Ansprüche, wobei die Breite der hochstehenden Rippe (41) 5 mm oder weniger beträgt.

7. Rad nach Anspruch 6, wobei die Breite der hochstehenden Rippe (41) im Wesentlichen 2 mm beträgt.

8. Rad nach einem der Ansprüche 1 bis 7, wobei die Breite jeder hochstehenden Lauffläche (34) an ihrer Spitze weniger als 5 mm beträgt.

9. Rad nach Anspruch 8, wobei die Breite jeder hochstehenden Lauffläche (34) an ihrer Spitze (39) im Wesentlichen 2 mm beträgt.

10. Rad nach einem der vorhergehenden Ansprüche, wobei x/y im Wesentlichen 4 beträgt.

11. Rad nach einem der vorhergehenden Ansprüche, wobei die kontinuierlich gekrümmte Linie der Kanäle (38) durchgehend den gleichen Radius aufweist.

12. Rad nach einem der vorhergehenden Ansprüche, wobei das Laufflächenprofil (32) in zwei Einzelprofile (20A, 20B) auf gegenüberliegenden Seiten einer Ebene zwischen gegenüberliegenden Seiten des Rades geteilt ist und die hochstehenden Laufflächenprofile (34) auf einer Seite der Ebene aus der Reihe der hochstehenden Laufflächen (34) auf der anderen Seite der Ebene treten.

13. Rad nach einem der vorhergehenden Ansprüche, wobei das Laufflächenprofil (32) in zwei identische Profile auf gegenüberliegenden Seiten einer Ebene zwischen gegenüberliegenden Seiten des Rades geteilt ist, wobei eine sich nach außen erstreckende hochstehende Rippe (41) in der Ebene bereitgestellt wird.

## Revendications

1. Roue destinée à être utilisée sur des pelouses ou des surfaces similaires, ladite roue ayant un motif de sculptures de bande de roulement (32) sur sa surface extérieure généralement circonférentielle, ledit motif de sculptures de bande de roulement (32) comprenant une succession de sculptures de bande de roulement saillantes (34) s'étendant généralement parallèlement à l'axe de la roue et une nervure saillante (41) dans un plan entre les côtés opposés de la roue s'étendant vers l'extérieur, de telle sorte que son bord circonférentiel extérieur présente un rayon depuis l'axe de la roue substantiellement identique au rayon maximum des sculptures de bande de roulement saillantes (34) du motif de sculptures de bande de roulement (32), ladite nervure saillante (41), pendant l'utilisation, réduisant le patinage latéral de l'appareil d'entretien de pelouse lors d'un fonctionnement sur un terrain en pente ; **caractérisée en ce que**
des parois en regard (36, 37) de sculptures de bande de roulement saillantes adjacentes (34) s'étendant suivant une ligne courbe continue entre elles pour définir un canal (38) entre les sculptures de bande de roulement saillantes adjacentes (34), la profondeur du canal (38) à sa partie la plus profonde par rapport à la circonférence extérieure de la roue étant y, et la distance circonférentielle entre des sculptures de bande de roulement saillantes adjacentes (34) étant x, x/y étant compris entre 2 et 6; et **en ce que** la ligne courbe continue des canaux (38) inclut des côtés opposés du canal (38) adjacents aux sculptures de bande de roulement saillantes (34) incluent une portion dans laquelle le rayon de la ligne courbe diminue.

2. Roue selon la revendication 1, dans laquelle ladite nervure saillante (41) présente des parois latérales s'étendant généralement dans des plans parallèles auxdits côtés opposés de la roue.

3. Roue selon la revendication 1 ou 2, dans laquelle le rayon depuis l'axe de la roue du bord circonférentiel extérieur de la nervure saillante (41) est inférieur de 0-4 mm au rayon maximum depuis l'axe de la roue des sculptures de bande de roulement saillantes (34) du motif de sculptures de bande de roulement (32).

4. Roue selon la revendication 3, dans laquelle le rayon depuis l'axe de la roue du bord circonférentiel extérieur de la nervure saillante (41) est inférieur d'environ 2 mm au rayon maximum depuis l'axe de la roue des sculptures de bande de roulement saillantes (34) du motif de sculptures de bande de roulement (32).

5. Roue selon les revendications 1 ou 2, dans laquelle le rayon depuis l'axe de la roue du bord circonférentiel extérieur de la nervure saillante (41) est égal au rayon maximum depuis l'axe de la roue des sculptures de bande de roulement saillantes (34) du motif de sculptures de bande de roulement (32).

6. Roue selon l'une quelconque des revendications précédentes, dans laquelle la largeur de ladite nervure saillante (41) est de 5 mm ou moins.

7. Roue selon la revendication 6, dans laquelle la largeur de ladite nervure saillante (41) est substantiellement de 2 mm.

8. Roue selon l'une quelconque des revendications 1 à 7, dans laquelle la largeur de chaque sculpture de bande de roulement saillante (34) au niveau de sa pointe est inférieure à 5 mm.

9. Roue selon la revendication 8, dans laquelle la largeur de chaque sculpture de bande de roulement saillante (34) au niveau de sa pointe (39) est substantiellement de 2 mm.

10. Roue selon l'une quelconque des revendications précédentes, dans laquelle x/y est substantiellement égal à 4.

11. Roue selon l'une quelconque des revendications précédentes, dans laquelle la ligne courbe continue des canaux (38) a le même rayon constant.

12. Roue selon l'une quelconque des revendications précédents, dans laquelle le motif de sculptures de bande de roulement (32) est divisé en deux motifs individuels (20A, 20B) sur des côtés opposés d'un plan entre les côtés opposés de la roue, et les sculptures de bande de roulement saillantes (34) sur un côté dudit plan sont décalées par rapport aux sculptures de bande de roulement saillantes (34) de l'autre côté dudit plan.

13. Roue selon l'une quelconque des revendications précédentes, dans laquelle le motif de sculptures de bande de roulement (32) est divisé en deux motifs identiques sur un côté opposé d'un plan entre des côtés opposés de la roue, une nervure saillante s'étendant vers l'extérieur (41) étant prévue dans ledit plan.
